(19) Europäisches Patentamt / European Patent Office / Office européen des brevets

(11) **EP 1 680 662 B1**

(12) **EUROPÄISCHE PATENTSCHRIFT**

(45) Veröffentlichungstag und Bekanntmachung des Hinweises auf die Patenterteilung:
**22.08.2007   Patentblatt 2007/34**

(21) Anmeldenummer: **04802649.6**

(22) Anmeldetag: **27.10.2004**

(51) Int Cl.:
*G01N 22/00* *(2006.01)*      *G01N 22/04* *(2006.01)*
*G01R 27/26* *(2006.01)*

(86) Internationale Anmeldenummer:
**PCT/DE2004/002390**

(87) Internationale Veröffentlichungsnummer:
**WO 2005/045411 (19.05.2005 Gazette 2005/20)**

(54) **VERFAHREN ZUR BESTIMMUNG VON FEUCHTE UND DICHTE EINES DIELEKTRISCHEN MATERIALS**

METHOD FOR DETERMINING THE HUMIDITY AND DENSITY OF A DIELECTRIC MATERIAL

PROCEDE DE DETERMINATION DE L'HUMIDITE ET DE LA DENSITE D'UN MATERIAU DIELECTRIQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **27.10.2003   DE 10350224**

(43) Veröffentlichungstag der Anmeldung:
**19.07.2006   Patentblatt 2006/29**

(73) Patentinhaber: **SARTORIUS AG**
**37075 Göttingen (DE)**

(72) Erfinder:
- **KUPFER, Klaus**
  **99423 Weimar (DE)**
- **TRINKS, Eberhard**
  **99423 Weimar (DE)**

(74) Vertreter: **Liedtke, Markus**
**Liedtke & Partner**
**Patentanwälte**
**Elisabethstraße 10**
**D-99096 Erfurt (DE)**

(56) Entgegenhaltungen:
**US-A- 5 397 993**

- **HERRMANN R ET AL: "FEUCHTEMESSUNG MIT MIKROWELLEN-RESONATOREN" TECHNISCHES MESSEN TM, R.OLDENBOURG VERLAG. MUNCHEN, DE, Bd. 64, Nr. 11, November 1997 (1997-11), Seiten 447-452, XP000738914 ISSN: 0171-8096**
- **K. KUPFER: "Radiofrequency and Microwave Moisture Sensing of Building Materials" SENSORS UPDATE, SPECIAL VOLUME: RF AND MICROWAVE SENSING OF MOIST MATERIALS, FOOD AND OTHER DIELECTRICS, Bd. 7, 2000, Seiten 27-50, XP002326260 WEINHEIM, NEW YORK ISBN: 3-527-29821-5**
- **R. KNÖCHEL: "Technology and Signal Processing of Dielectrometric Microwave Sensors for Industrial Applications" SENSORS UPDATE, SPECIAL VOLUME: RF AND MICROWAVE SENSING MOIST MATERIALS, FOOD AND OTHER DIELECTRICS, Bd. 7, 2000, Seiten 65-105, XP002327685 WEINHEIM, NEW YORK ISBN: 3-527-29821-5**
- **ARORA R K ET AL: "COMPUTER-AIDED MEASUREMENT OF Q-FACTOR WITH APPLICATION TO QUASI-OPTICAL OPEN RESONATORS" IEEE TRANSACTIONS ON INSTRUMENTATION AND MEASUREMENT, IEEE INC. NEW YORK, US, Bd. 40, Nr. 5, 1. Oktober 1991 (1991-10-01), Seiten 863-866, XP000275824 ISSN: 0018-9456**
- **LUITEN A N ET AL: "HIGH-RESOLUTION MEASUREMENT OF THE TEMPERATURE-DEPENDENCE OF THE Q,COUPLING AND RESONANT FREQUENCY OF A MICROWAVE RESONATOR" MEASUREMENT SCIENCE AND TECHNOLOGY, IOP PUBLISHING, BRISTOL, GB, Bd. 7, Nr. 6, 1. Juni 1996 (1996-06-01), Seiten 949-953, XP000597065 ISSN: 0957-0233**

EP 1 680 662 B1

- KAIFEZ D: "Q-FACTOR MEASUREMENT TECHNIQUES" RF DESIGN, CARDIFF PUBLISHING CO, ENGLEWOOD,CO, US, Bd. 22, Nr. 8, August 1999 (1999-08), Seite 56,58,60,62,64,66,73, XP000868369 ISSN: 0163-321X

## Beschreibung

Die Erfindung betrifft ein Verfahren zur Bestimmung von Feuchte und/oder Dichte eines dielektrischen Materials in einem mit dem Material gefüllten Resonator mit Sender und Empfänger.

Die dielektrischen Eigenschaften eines Materials, beschrieben durch die komplexe, relative Dielektrizitätskonstante $\varepsilon_r = \varepsilon_r' - i\varepsilon_r''$ können bei porösen Materialien durch Feuchte und Dichte beeinflusst werden. Feuchte und Dichte verändern somit auch die skalaren Parameter Resonanzfrequenz $f_r$ und Resonatorgüte $Q$ eines materialgefüllten Resonators gegenüber denen des leeren, mit Luft gefüllten Resonators ($f_{r_0}$ und $Q_0$) in der Weise, dass $f_{r_m} = \frac{f_{r_0}}{\sqrt{\varepsilon_r}}$ und $\frac{1}{Q_m} = \frac{1}{Q_0} + \frac{\varepsilon_r''}{\varepsilon_r'}$, wobei $1 \leq \varepsilon_r' \leq \varepsilon_{r_{max}}'$ und $0 \leq \varepsilon_r'' \leq \varepsilon_{r_{max}}''$, worin $\varepsilon_{r_{max}}'$ und und $\varepsilon_{r_{max}}''$ die Maximalwerte sind, die sich für das jeweilige Material aus dem zugeordneten Feuchte- und Dichtebereich ergeben.

Im Stand der Technik sind verschiedene Verfahren zur Messung der Feuchte oder Dichte granularer Materialien bekannt, bei denen das Resonanzverhalten eines materialgefüllten Resonators genutzt wird.

Beispielsweise ist aus US 566 60 61 ein Verfahren zur Messung von Feuchtigkeit in körnigen Materialien mittels Mikrowellen bekannt, bei dem während des Auf- und Abfahrens durch einen Frequenzbereich elektronisch auf eine Schwelle reagiert wird und aus den zeitlichen Eigenschaften derart erzeugter Pulse auf die Komponenten der Dielektrizitätskonstante geschlossen wird.

Alle Verfahren sind relativ langsam und weisen entweder eine Abhängigkeit von der Dichte des Materials oder relativ große Fehler bei der Bestimmung der Feuchte auf.

Der Erfindung liegt die Aufgabe zugrunde, ein Verfahren der eingangs genannten Art anzugeben, mit dem eine schnelle, genaue und dichteunabhängige Bestimmung der Feuchte möglich ist.

Erfindungsgemäß wird die Aufgabe mit einem Verfahren, welches die in Anspruch 1 angegebenen Merkmale enthält, gelöst.

Vorteilhafte Ausgestaltungen sind in den Unteransprüchen angegeben.

Im Sinne der Erfindung kann im Folgenden als Bandbreite des Resonators jede beliebige, die Resonanzbreite beschreibende Größe angesehen werden, wobei entsprechende Anpassungen in den jeweiligen Definitionen, insbesondere der Grenzwerte, und Gleichungen vorzusehen sind.

Durch die digitale Aufnahme der Resonanzkurve ist eine schnelle Erfassung der Messwerte möglich und somit eine enge zeitlich-räumliche Zuordnung der daraus bestimmten Feuchte zu dynamisch durch den Resonator geführtem Material möglich. Die Erfindung sieht dazu vor, dass der Sender ein Signal abgibt, eine Resonanzkurve des gefüllten Resonators schrittweise abgetastet wird, wobei bei verschiedenen Frequenzen jeweils zugehörige Signalstärkewerte des Empfängersignals gemessen werden, für den gefüllten Resonator aus gemessenen Punkten die Resonanzfrequenz und die Bandbreite ermittelt werden und durch Lösen eines Gleichungssystems, das die Resonanzfrequenzen und Bandbreiten des leeren und des gefüllten Resonators und bekannte Kalibrierungskoeffizienten des Resonators enthält, die Feuchte und/oder Dichte des Materials berechnet werden. Dieses Verfahren ermöglicht eine dichteunabhängige Bestimmung der Feuchte des Materials. Zudem kann mit geringem Aufwand die Dichte des Materials ermittelt werden. Ein solches Verfahren ist z.B. aus R. Herrmann: "Feuchtemessung mit Mikrowellen-Resonatoren" (Technisches Messen 64 (1997) 11) bekannt. Die Erfindung sieht vor, dass aus den Punkten zum Ermitteln der Bandbreite des gefüllten Resonators die Größen Resonanzfrequenz, Resonatorgüte und Resonanzmaximum ermittelt werden und daraus die Bandbreite berechnet wird.

Erfindungsgemäß wird ein unterer Grenzwert errechnet und in dem Bereich, in dem die Signalstärkewerte größer als der Grenzwert sind, ein zweiter Abtastdurchgang mit kleineren Schrittweiten durchgeführt. Durch ein 2-Pass-Verfahren kann dabei die Genauigkeit erheblich gesteigert und der Zeitaufwand dennoch gering gehalten werden, besonders, wenn nur im Bereich des Resonanzpeaks eine verringerte Schrittweite im zweiten Abtastdurchgang genutzt wird. Dieses Abtastverfahren per se ist aus A.N. Luiten: "High-resolution measurement of the temperature-dependence of the Q, coupling and resonant frequency of a microware resonator " (Meas. Sci. Technol. 7 (1996) 949) bekannt. Vorteilhafterweise erfolgt das Abtasten der Resonanzkurve in äquidistanten Schritten. Die einfachste und schnellste Form des Abtastens besteht aus äquidistanten Schritten. Variable Schrittgrößen im zweiten Abtastdurchgang können dessen Dauer verkürzen.

Vorzugsweise wird der Sender mit konstanter Stärke betrieben. Durch eine konstante Signalstärke des Senders können die Messwerte am Empfänger ohne Anpassung oder Skalierung verwandt werden.

Erfindungsgemäß werden die Größen Resonanzfrequenz, Resonatorgüte, Resonanzmaximum des Resonators ermittelt werden, indem eine Menge von Punkten willkürlich und/oder zufällig ausgewählt wird, deren Anzahl ein ganzzahliges Vielfaches von drei ist und mindestens sechs beträgt, und die Punktemenge in drei gleich große Gruppen unterteilt wird, für jede Kombination von drei Punkten, wobei jeder Punkt aus einer anderen Gruppe stammt, ein erstes Gleichungssystem, das aus drei für diese drei Punkte geltenden Gleichungen der analytische Resonanzkurve besteht, nach diesen Größen aufgelöst werden und für jede dieser Größen jeweils der Mittelwert aus den bei den Kombinationen errechneten Werten gebildet wird. Noch exaktere Werte als mit drei Punkten werden erreicht, wenn aus der vorhandenen Punktemenge mehrere Dreiergruppen gebildet werden und die dabei erhaltenen Ausgangsparameter über alle Gruppen gemittelt werden. Diese Art der Ermittlung von Resonator kenngrößen ist aus R.K. Avora : "Computer-Aided Measurement of Q-Factor with Application to Quasi-Optical Open Resonators "(IEEE Trans. on Justr. & Meas. 40 (1991) 863) bekannt.

In einer zweckmäßigen Ausgestaltung ist dabei als Bedingung für die willkürliche und/oder zufällige Auswahl der Punkte der Signalwert eines auszuwählenden Punktes größer als der um 3 dB gedämpfte höchste Signalwert. Bei beiden Verfahren mit drei Punkten oder einem Vielfachen davon werden vorzugsweise nur solche Punkte aus der Resonanzkurve gewählt, deren Signalstärke größer als der um 3 dB gedämpfte Maximalwert aller Messwerte ist, da so nur aussagekräftige Punkte zum Einsatz kommen.

Das zu lösende zweite Gleichungssystem wird vorzugsweise so gewählt, dass es den Zusammenhang von Feuchte und Dichte zu Resonanzfrequenz- und Resonatorgüteveränderung beziehungsweise zu Resonanzfrequenz- und Bandbreiteveränderung in guter Näherung beschreibt.

Zweckmäßigerweise ist das zweite Gleichungssystem nichtlinear.

In einer bevorzugten Ausführungsform wird das Abtasten mittels des Senders bis in den Mikrowellenbereich durchgeführt.

Vorteilhafterweise werden für die Messung des Empfängersignals Spannungs- oder Stromwerte des Empfängers benutzt. Zur Ermittlung der Resonanzkurve dient vorzugsweise die am Empfänger entstehende elektrische Spannung, da sie einfach und ohne Rückkopplung messbar ist. Es kann jedoch auch die Stromstärke in einem Empfängerkreislauf gemessen werden.

Im Folgenden wird für die gemessenen Größen der Einfachheit halber die Bezeichnung $U_i$ benutzt, damit soll jedoch nicht die alleinige Verwendung der Spannung impliziert sein.

Die aus den diskreten Messpunkten zu rekonstruierende Resonanzkurve ist nur eine möglichst gute Annäherung an die reale Resonanzkurve. Sie wird durch den Verlauf der Signalamplitude $U$ am Empfänger über der eingespeisten Frequenz $f$ charakterisiert, wobei $U_r$ das Resonanzmaximum und $Q$ die Güte der Resonanz ist:

$$U = \frac{U_r}{\sqrt{1+Q^2\left(\frac{f}{f_r}-\frac{f_r}{f}\right)^2}}$$

Die Grenzfrequenzen $f_a$ und $f_b$ sind die Frequenzen, an denen die Signalstärke einen definierten Wert über-beziehungsweise unterschreitet. Vorzugsweise wird dafür der Wert entsprechend einer Dämpfung des Maximums um 3 dB gewählt: $U_a = U_b = \frac{U_r}{\sqrt{2}}$. Zwischen den Grenzfrequenzen und den Kurvenparametern Resonanzfrequenz $f_r$ und Resonatorgüte $Q$ bestehen die Zusammenhänge: $f_r = \sqrt{f_a \cdot f_b}$ , $Q = \frac{\sqrt{f_a \cdot f_b}}{f_b - f_a}$ . Der Abstand zwischen den Grenzfrequenzen wird als Bandbreite $BW = f_b - f_a = \frac{f_r}{Q}$ definiert.

Die Erfindung wird im Folgenden anhand von Ausführungsbeispielen näher erläutert.

Dazu zeigen

**Figur 1** eine abgetastete Resonanzkurve,
**Figur 2** eine in einem 2-Pass-Verfahren abgetastete Resonanzkurve,
**Figur 3** eine erste Methode zur Bestimmung der Resonanzparameter, die nicht unter die Ansprüche fällt,
**Figur 4** eine zweite Methode zur Bestimmung der Resonanzparameter, die eben Falls nicht unter die Ansprüche fällt,
**Figur 5** eine dritte erfindungsgemäße Methode zur Bestimmung der Resonanzparameter und
**Figur 6** eine flächenhafte Darstellung von Kalibrierungskurven.

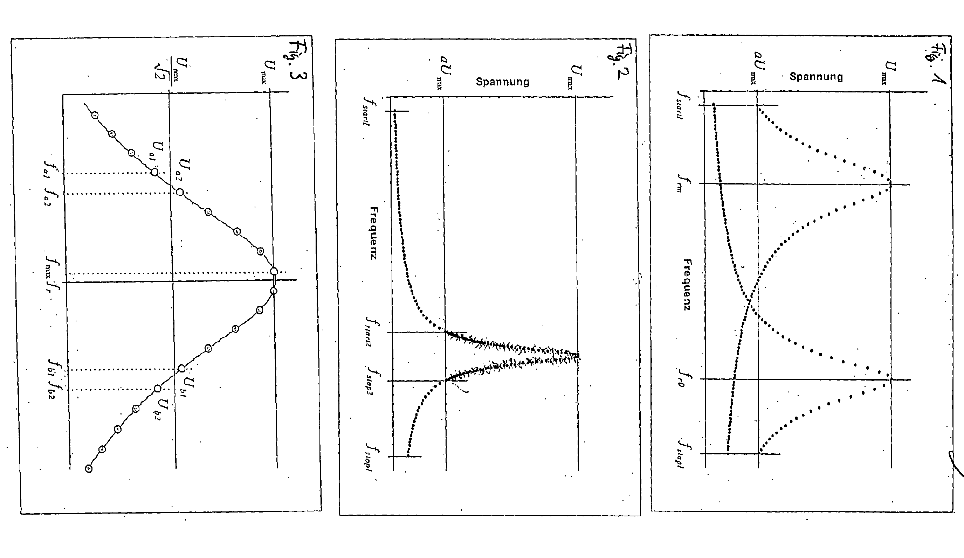

In **Figur 1** sind zwei Resonanzkurve aufeinander dargestellt, wie sie mit dem erfindungsgemäßen Verfahren aufgenommen wurden, die rechte Resonanzkurve mit leerem, die linke Resonanzkurve mit materialgefülltem Resonator.

Durch Abtasten (Wobbeln) des Resonators zwischen der Startfrequenz $f_{start1}$ und der Stoppfrequenz $f_{stop1}$ wird die Resonanzkurve in diskreten Schritten erfasst. Die Startfrequenz wird aus der maximal verschobenen Frequenz

$$f_{r_m} = \frac{f_{r_0}}{\sqrt{\varepsilon_{r_{max}}}},$$ der maximal veränderten Güte $\frac{1}{Q_m} = \frac{1}{Q_0} + \varepsilon''_{r_{max}}$ und dem normierten Spannungsverhältnis

$$a = \frac{U_a}{U_{max}} < \frac{1}{\sqrt{2}}$$ berechnet: $f_{start1} = -\frac{f_{r_m}}{2Q_m}\sqrt{\frac{1-a^2}{a^2}} + \sqrt{(\frac{f_{r_m}}{2Q_m})^2 \cdot \frac{1-a^2}{a^2} + f_{r_m}^2}$ . Die Stoppfrequenz ergibt sich mit

$f_r = f_{r_0}$ zu : $f_{stop1} = -\frac{f_{r_0}}{2Q_m}\sqrt{\frac{1-a^2}{a^2}} + \sqrt{(\frac{f_{r_0}}{2Q_m})^2 \cdot \frac{1-a^2}{a^2} + f_{r_0}^2}$ .

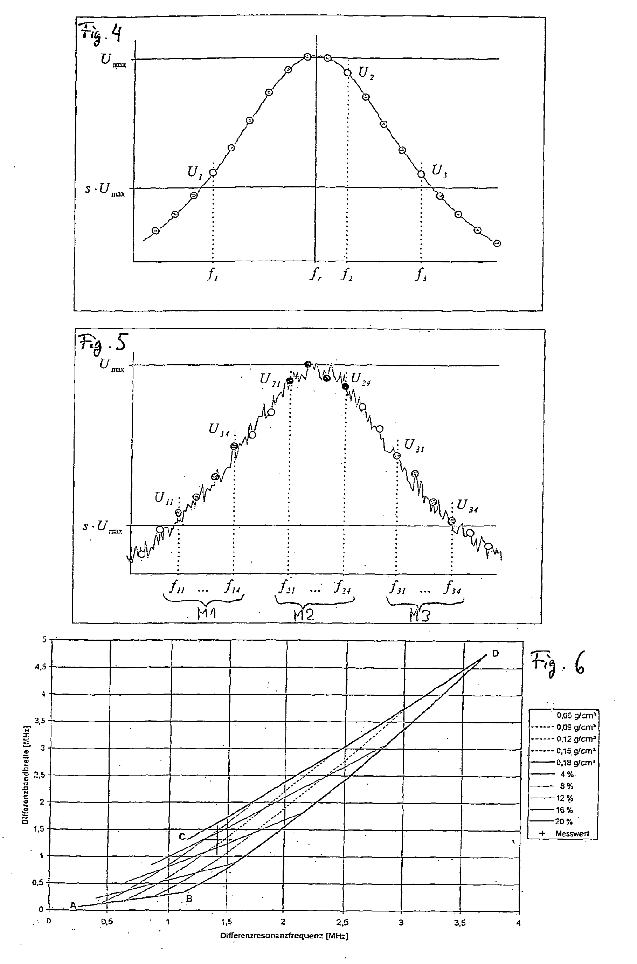

Die Wobbelgeschwindigkeit hängt unter anderem von der Anzahl $n_1$ der Abtastpunkte ab und wird erfindungsgemäß mit einem 2-Pass-Verfahren wie in **Figur 2** dargestellt erhöht. Dazu wird zuerst mit einer geringeren Anzahl von Abtastpunkten und demzufolge einer größeren Frequenzschrittweite $\Delta f_1 = \frac{f_{stop1} - f_{start1}}{n_1 - 1}$ abgetastet und anschließend im zweiten Schritt, nach vorheriger Ermittlung der Start- und Stoppfrequenzen $f_{start2} = f|_{U \approx U_a \wedge f'>0}$, $f_{stop2} = f|_{U \approx U_a \wedge f'<0}$ oder $f_{start2} = f|_{U \approx U_a \wedge U<U_r}$, $f_{stop2} = f|_{U \approx U_a \wedge U>U_r}$ mit einer kleineren Frequenzschrittweite $\Delta f_2 = \frac{f_{stop2} - f_{start2}}{n_2 - 1}$ zwischen diesen Frequenzen erneut abgetastet.

Aus der abgetasteten, gemessenen Resonanzkurve werden die Resonatorparameter $f_r$, $Q$ und $U_r$ nach dem 3k-Punkte-Verfahren ermittelt werden.

**Figur 3** zeigt das fafb-Verfahren, das kein Ausführungsbeispiel der Erfindung darstellt, es basiert auf der direkten Ermittlung einer ersten und einer zweiten Grenzfrequenz $f_a$, $f_b$ aus der gemessenen Resonanzkurve. Dazu wird zuerst der Punkt oder auch Abtastpunkt $(f=f_{max}/U=U_{max})$ mit der höchsten Spannung $U = U_{max}$ zur Berechnung einer 3-dB-Grenzlinie $U_{3dB} = \frac{U_{max}}{\sqrt{2}}$ bestimmt. Anschließend werden die jeweils beiden Punkte in unmittelbarer Nähe der 3-dB-Grenzlinie ermittelt. Durch lineare Interpolation zwischen den Abtastpunkten a1 und a2 sowie b1 und b2 erhält man die erste und die zweite 3-dB-Grenzfrequenz $f_a$, $f_b$:

$$f_a = f_{a1} + \frac{\frac{U_{max}}{\sqrt{2}} - U_{a1}}{U_{a2} - U_{a1}}(f_{a2} - f_{a1}), \quad f_b = f_{b1} + \frac{\frac{U_{max}}{\sqrt{2}} - U_{b1}}{U_{b2} - U_{b1}}(f_{b2} - f_{b1})$$

Aus den Gleichungen $f_r = \sqrt{f_a \cdot f_b}$ , $Q = \frac{\sqrt{f_a \cdot f_b}}{f_b - f_a}$ können $f_r$ und $Q$ berechnet werden. Die Resonanzspannung $U_r$ ergibt sich dann zu:

$$U_r = U_{max} \cdot \sqrt{1 + Q^2 \left(\frac{f_{max}}{f_r} - \frac{f_r}{f_{max}}\right)^2} \ .$$

Die Berechnung der Grenzfrequenzen ist durch die Diskretisierung der Resonanzkurve mehr oder weniger stark fehlerbehaftet - einmal durch die von $U_{max}$ abgeleitete Bestimmung der 3-dB-Grenzlinie ( $U_a = U_{max}/\sqrt{2} \leq U_r/\sqrt{2}$ ) und zum anderen durch die lineare Interpolation zwischen den Abtastpunkten a1, a2, b1 und b2. Eine höhere Abtastrate verringert zwar die Fehler, verlängert aber auch gleichzeitig die Abtastzeit und senkt damit die Wobbelgeschwindigkeit. Allenfalls eine nichtlineare Interpolation ist bei diesem Verfahren zur Verbesserung der Genauigkeit möglich.

Beim in **Figur 4** dargestellten 3-Punkte-Verfahren, das ebenfalls kein Ausführungs beispiel der Erfindung darstellt, werden willkürlich oder durch einen Zufallsgenerator drei Abtaststellen $U_1$, $U_2$, $U_3$ vorzugsweise oberhalb der Linie $U_s = s \cdot U_{max}$ mit $s < \frac{1}{\sqrt{2}}$ ausgesucht.

Durch Lösen des ersten Gleichungssystems G1:

$$U_1 = \frac{U_r}{\sqrt{1 + Q^2\left(\frac{f_1}{f_r} - \frac{f_r}{f_1}\right)^2}}, \quad U_2 = \frac{U_2}{\sqrt{1 + Q^2\left(\frac{f_2}{f_r} - \frac{f_r}{f_2}\right)^2}}, \quad U_3 = \frac{U_3}{\sqrt{1 + Q^2\left(\frac{f_3}{f_r} - \frac{f_r}{f_3}\right)^2}}$$

erhält man die Resonatorparameter $f_r$, $Q$ und $U_r$:

$$f_r = \sqrt[4]{\frac{U_1^2(U_3^2-U_2^2)f_1^2+U_2^2(U_1^2-U_3^2)f_2^2+U_3^2(U_2^2-U_1^2)f_3^2}{\frac{U_1^2(U_2^2-U_3^2)}{f_1^2}+\frac{U_2^2(U_3^2-U_1^2)}{f_2^2}+\frac{U_3^2(U_1^2-U_2^2)}{f_3^2}}}$$

$$Q = \sqrt{\frac{U_1^2-U_2^2}{U_2^2\left(\frac{f_2}{f_r}-\frac{f_r}{f_2}\right)^2-U_1^2\left(\frac{f_1}{f_r}-\frac{f_r}{f_1}\right)^2}}$$

$$U_r = U_1\sqrt{1+Q^2\left(\frac{f_1}{f_r}-\frac{f_r}{f_1}\right)^2}$$

Der Vorteil des 3-Punkte-Verfahrens gegenüber dem fafb-Verfahren liegt darin, dass keine Fehler durch die Diskretisierung der Resonanzkurve auftreten und zum Abtasten der Resonanzkurve nur wenige Punkte benötigt werden und somit eine hohe Wobbelgeschwindigkeit erreicht wird.

Ist die Resonanzkurve verrauscht, dann werden mit dem 3-Punkte-Verfahren auch fehlerbehaftete Resonatorparameter ermittelt. Um den Einfluss des Rauschens zu verringern, werden erfindungsgemäß mehr als drei Abtastpunkte ausgewählt, und zwar eine Anzahl $3 \cdot k$, $k = 2,3,4, ...$, und in drei Gruppen M1, M2, M3 mit je $k$ Punkten oberhalb der Linie $U_s = s \cdot U_{max}$ verteilt. **Figur 5** zeigt dieses 3k-Punkte-Verfahren. Für alle der $k^3$ Möglichkeiten, jeweils einen Punkt aus jeder der drei Gruppen miteinander zu kombinieren, werden nach dem oben beschriebenen 3-Punkte-Verfahren die Resonatorparameter aus dem ersten Gleichungssystem G1 berechnet und die $k^3$ Teilergebnisse anschließend gemittelt: $f_r = \frac{1}{k^3}\sum_{j=1}^{k^3}f_{rj}$, $Q = \frac{1}{k^3}\sum_{j=1}^{k^3}Q_j$, $U_r = \frac{1}{k^3}\sum_{j=1}^{k^3}U_{rj}$.

Um Feuchte und Dichte aus ermittelten Resonatorparametern zu bestimmen, ist es erforderlich, dass die benutzte Anordnung mit Materialien bekannter Feuchte und Dichte kalibriert wird. Die Kalibrierung erfolgt zweckmäßigerweise außerhalb des Normalbetriebs.

Bei der Kalibrierung werden den Stoffgrößen Feuchtegehalt $\psi$ und Dichte $\varrho$ die elektrischen Resonatorwerte Resonanzfrequenz $f_r$, Resonatorgüte $Q$ beziehungsweise Bandbreite $BW$ ($BW = f_r/Q$) zugeordnet. Diese Zuordnung zwischen den stofflichen und den elektrischen Werten ist nichtlinear und kann mit hinreichender Genauigkeit für einen definierten Feuchte- und Dichtebereich beispielsweise durch folgendes zweites Gleichungssystem G2 beschrieben werden:

$$\Delta f_r = a_{f_{r2}}\varrho^2\psi^2 + a_{f_{r1}}\varrho\psi^2 + b_{f_{r2}}\varrho^2\psi + b_{f_{r1}}\varrho\psi + c_{f_{r2}}\varrho^2 + c_{f_{r1}}\varrho$$

$$\Delta BW = a_{BW_2}\varrho^2\psi^2 + a_{BW_1}\varrho\psi^2 + b_{BW_2}\varrho^2\psi + b_{BW_1}\varrho\psi + c_{BW_2}\varrho^2 + c_{BW_1}\varrho$$

$\Delta f_r$ und $\Delta BW$ sind die Differenzen von Resonanzfrequenz beziehungsweise Bandbreite vom leeren zum materialgefüllten Resonator:

$$\Delta f_r = f_{r_0} - f_{r_m}, \ \Delta BW = BW_m - BW_0$$

Aufgabe der Kalibrierung ist es nun, für das jeweilige Material die zwölf Kalibrierungskoeffizienten $a_{f_{r1}}$, $a_{f_{r2}}$, $b_{f_{r1}}$, $b_{f_{r2}}$, $c_{f_{r1}}$, $c_{f_{r2}}$, $a_{BW_1}$, $a_{BW_2}$, $b_{BW_1}$, $b_{BW_2}$, $c_{BW_1}$, $c_{BW_2}$ aus einer hinreichend großen Anzahl von Kalibrierwerten ($\Delta f_r$ und $\Delta BW$ mit den dazugehörigen Stoffwerten $\psi$ und $\varrho$) zu bestimmen.

Dazu werden die Messwerte von Differenzresonanzfrequenz $\Delta f_r$ und Differenzbandbreite $\Delta BW$ den Feuchte- und Dichtewerten, die mit entsprechenden Referenzverfahren ermittelt wurden, zugeordnet. Diese Kalibrierwerte, die die Resonanzfrequenz und Bandbreite in Abhängigkeit von Feuchte und Dichte kennzeichnen, sind die Basis für die Kalibrierkoeffizientenermittlung. Die Regression der Kalibrierwerte mit gleicher Feuchte erfolgt in der Form $\Delta f_r = d_{f,2}\varrho^2 + d_{f,1}\varrho$ und $\Delta f_r = d_{BW2}\varrho^2 + d_{BW1}\varrho$, wobei die Regressionskurven durch den Ursprung gehen müssen, da für den leeren Resonator (Luft mit $\varrho$ = 0) auch $\Delta f_r$ und $\Delta BW$ gleich Null sind. Die Regression liefert Kalibrierpunkte gleicher Dichte in Abhängigkeit von der Feuchte. Mit diesen wird eine erneute Regression der Form $\Delta f_r = a_{fr}\psi^2 + b_{fr}\psi + c_{fr}$ und $\Delta BW = a_{BW}\psi^2 + b_{BW}\psi + c_{BW}$ durchgeführt. Die so ermittelten Werte für die Regressionskoeffizienten $a_{fr}$, $b_{fr}$, $c_{fr}$, und $a_{BW}$, $b_{BW}$, $c_{BW}$ werden über der Dichte aufgetragen und daraus die Kalibrierkoeffizienten mittels quadratischer Regression bestimmt.

**Figur 6** zeigt die Ergebnisse der Kalibrierung in Form einer Kurvenschar, die auch zur Auswertung dient.

Aus den gemessenen Differenzresonanzfrequenz- und Differenzbandbreitewerten $\Delta f_r$ und $\Delta BW$ werden für das entsprechende Material Feuchtegehalt $\psi$ und Dichte $\varrho$ durch Lösen des obigen zweiten Gleichungssystems G2 berechnet.

Dabei ergeben sich zwei reelle und zwei imaginäre Wurzeln. Ob es für den interessierenden Feuchte- und Dichtebereich nur eine reelle Lösung gibt, kann aus dem Verlauf der Kalibrierkurven im $\Delta f_r$-$\Delta BW$-Diagramm ermittelt werden. Im $\Delta f_r$-$\Delta BW$-Diagramm wird die Differenzbandbreite in Abhängigkeit von der Differenzresonanzfrequenz für Kurven gleicher Dichte und Feuchte dargestellt. Ist der Verlauf dieser Kurven im interessierenden Feuchte- und Dichtebereich, gekennzeichnet durch die Punkte A, B, C und D in Figur 6, stetig und eindeutig, dann existiert in diesem Bereich nur eine reelle Lösung.

Für das Lösen des zweiten Gleichungssystems G2 selbst bietet sich ein Iterationsverfahren an. Dazu wird das zweite Gleichungssystem G2 nach $\psi$ aufgelöst:

$$\psi = -\frac{b_{fr2}\varrho+b_{fr1}}{2a_{fr2}\varrho+2a_{fr1}\varrho} + \sqrt{\left(\frac{b_{fr2}\varrho+b_{fr1}}{2a_{fr2}\varrho+2a_{fr1}\varrho}\right)^2 - \frac{c_{fr2}\varrho^2+c_{fr1}-\Delta f_{r0}}{a_{fr2}\varrho^2+a_{fr1}\varrho}}$$

$$\psi = -\frac{b_{BW2}\varrho+b_{BW1}}{2a_{BW2}\varrho+2a_{BW1}\varrho} + \sqrt{\left(\frac{b_{BW2}\varrho+b_{BW1}}{2a_{BW2}\varrho+2a_{BW1}\varrho}\right)^2 - \frac{c_{BW2}\varrho^2+c_{BW1}-\Delta BW_0}{a_{BW2}\varrho^2+a_{BW1}\varrho}}$$

Aus dem Schnittpunkt beider Gleichungen in einem Feuchte-Dichte-Diagramm erhält man die gesuchten Werte für $\psi$ und $\varrho$.

BEZUGSZEICHENLISTE

| | |
|---|---|
| $f_r$ | Resonanzfrequenz im allgemeinen Fall |
| $f_{r0}$ | Resonanzfrequenz des leeren Resonators |
| $f_{rm}$ | Resonanzfrequenz des gefüllten Resonators |
| $f_{start1}$, $f_{stop1}$ | Start- und Stoppfrequenzen für ersten Abtastdurchgang |
| $U_{max}$ | Größter gemessener Signalstärkewert |
| a, s | Grenzwertfaktoren |
| $f_{start2}$, $f_{stop2}$ | Start- und Stoppfrequenzen für zweiten Abtastdurchgang |
| $f_{max}$ | Frequenz, bei der der größte Signalstärkewert vorliegt |
| $(f_{a1}/U_{a1})$, $(f_{a2}/U_{a2})$ | Benachbarte Punkte der ersten Grenzfrequenz |
| $(f_{b1}/U_{b1})$, $(f_{b2}/U_{b2})$ | Benachbarte Punkte der zweiten Grenzfrequenz |
| $(f_1/U_1)$ ... $(f_3/U_3)$ | Drei ausgewählte Punkte |
| M1, M2, M3 | Punktegruppen |
| $(f_{11}/U_{11})$ ... $(f_{14}/U_{14})$ | Elemente Punktegruppe M1 |
| $(f_{21}/U_{21})$ ... $(f_{24}/U_{24})$ | Elemente Punktegruppe M2 |

$(f_{31}/U_{31})$ ... $(f_{34}/U_{34})$      Elemente Punktegruppe M3
A,B,C,D                      Grenzen des interessierenden Feuchte- und Dichtebereichs

**Patentansprüche**

1. Verfahren zur Bestimmung von Feuchte ($\psi$) und/oder Dichte ($\varrho$) eines dielektrischen Materials in einem mit dem Material gefüllten Resonator mit Sender und Empfänger, wobei

   - der Sender ein Signal abgibt,
   - eine Resonanzkurve des gefüllten Resonators schrittweise abgetastet wird, wobei bei verschiedenen Frequenzen ($f_i$) jeweils zugehörige Signalstärkewerte ($U_i$) des Empfängersignals gemessen werden,
   - ein unterer Grenzwert ($U_a$) errechnet wird und in dem Bereich, in dem die Signalstärkewerte ($U_i$) größer als der Grenzwert ($U_a$) sind, ein zweiter Abtastdurchgang mit kleineren Schrittweiten durchgeführt wird,
   - für den gefüllten Resonator aus gemessenen Punkten ($f_i/U_i$) die Resonanzfrequenz ($f_{r_m}$) und die Bandbreite ($BW_m$) ermittelt werden, wobei aus den Punkten ($f_i/U_i$) des gefüllten Resonators die Größen Resonanzfrequenz ($f_{r_m}$), Resonatorgüte ($Q_m$) und Resonanzmaximum ($U_{r_m}$) ermittelt werden, indem

      - eine Menge von Punkten ($f_i/U_i$) willkürlich und/oder zufällig ausgewählt wird, deren Anzahl ein ganzzahliges Vielfaches von drei ist und mindestens sechs beträgt, und die Punktemenge in drei gleich große Gruppen ($M_1$, $M_2$, $M_3$) unterteilt wird,
      - für jede Kombination von drei Punkten ($f_i/U_i$), wobei jeder Punkt ($f_i/U_i$) aus einer anderen Gruppe ($M_1$, $M_2$, $M_3$) stammt, ein erstes Gleichungssystem (G1), das aus drei für diese drei Punkte ($f_i/U_i$) geltenden Gleichungen der analytischen Resonanzkurve besteht, nach diesen Größen ($f_{r_k}$, $Q_k$, $U_{r_k}$) aufgelöst wird und
      - für jede dieser Größen ($f_r$, $Q$, $U_r$) jeweils der Mittelwert aus den bei den Kombinationen errechneten Werten ($f_{r_k}$, $Q_k$, $U_{r_k}$) gebildet wird,

      - durch Lösen eines zweiten Gleichungssystems (G2), das die Resonanzfrequenzen ($f_{r_0}$, $f_{r_m}$) und Bandbreiten ($BW_0$, $BW_m$) des leeren und des gefüllten Resonators und bekannte Kalibrierungskoeffizienten ($a_{f_{r_1}}$, $a_{f_{r_2}}$, $b_{f_{r_1}}$, $b_{f_{r_2}}$, $c_{f_{r_1}}$, $c_{f_{r_2}}$, $a_{f_{bw_1}}$, $a_{f_{bw_2}}$, $b_{f_{bw_1}}$, $b_{f_{bw_2}}$, $c_{f_{bw_1}}$, $c_{f_{bw_2}}$) des Resonators enthält, die Feuchte ($\psi$) und/oder Dichte ($\varrho$) des Materials berechnet werden.

2. Verfahren nach Anspruch 1, **dadurch gekennzeichnet, dass** das Abtasten der Resonanzkurve in äquidistanten Schritten ($\Delta f_1$, $\Delta f_2$) erfolgt.

3. Verfahren nach Anspruch 1 oder 2, **dadurch gekennzeichnet, dass** der Sender mit konstanter Stärke betrieben wird.

4. Verfahren nach einem der vorhergehenden Ansprüche, **dadurch gekennzeichnet, dass** als Bedingung für die willkürliche und/oder zufällige Auswahl der Punkte ($f_i/U_i$) der Signalwert ($U_i$) eines auszuwählenden Punktes ($f_i/U_i$) größer als der um 3 dB gedämpfte höchste Signalwert ($U_{max}$) ist.

5. Verfahren nach einem der vorhergehenden Ansprüche, **dadurch gekennzeichnet, dass** das zweite Gleichungssystem (G2) den Zusammenhang zwischen Feuchte ($\psi$) und Dichte ($\varrho$) einerseits und Resonanzfrequenz ($f_r$) und Resonatorgüte (Q) oder Resonanzfrequenz ($f_r$) und Bandbreite (*BW*) andererseits in einem vorgegebenen Feuchte- und Dichtebereich nur näherungsweise beschreibt.

6. Verfahren nach einem der vorhergehenden Ansprüche, **dadurch gekennzeichnet, dass** das zweite Gleichungssystem (G2) nichtlinear ist.

7. Verfahren nach einem der vorhergehenden Ansprüche, **dadurch gekennzeichnet, dass** das Abtasten mittels des Senders bis in den Mikrowellenbereich durchgeführt wird.

8. Verfahren nach einem der vorhergehenden Ansprüche, **dadurch gekennzeichnet, dass** für die Messung des Empfängersignals Spannungs- oder Stromwerte des Empfängers benutzt werden.

**Claims**

1. Method for determining humidity ($\psi$) and/or density ($\varrho$) of a dielectric material inside a resonator comprising a transmitter and a receiver, the resonator filled with the material, wherein

   - the transmitter emits a signal
   - a resonance curve of the filled resonator is sampled stepwise, wherein respective signal strength values ($U_i$) of the receiver signal are measured at different frequencies ($f_i$)
   - a lower limit value ($U_a$) is calculated and a second sample pass with shorter stepwidths is carried out in the range, where the signal strength values($U_i$) are greater than the limit value ($U_a$)
   - the resonance frequency ($f_{r_m}$) and the bandwidth ($BW_m$) are determined from measured points ($f_i/U_i$) for the filled resonator, wherein the measures resonance frequency ($f_{r_m}$), resonator Q factor ($Q_m$) and resonance maximum ($U_{r_m}$) are determined from points ($f_i/U_i$) of the filled resonator by

      - arbitrarily and/or randomly selecting a set of points ($f_i/U_i$) whose number is an integer multiple of three, the number being at least six, wherein the set of points is divided into three equally big groups ($M_1 M_2, M_3$),
      - a first system of equations (G1) is solved for the measures ($f_{r_k}$, $Q_k$, $U_{r_k}$) for each combination of three points ($f_i/U_i$), wherein each point ($f_i/U_i$) is in another group ($M_1$, $M_2$, $M_3$), wherein the system of equations (G1) consists of three equations of the analytic resonance curve which are valid fort hese three points ($f_i/U_i$), and
      - the respective average of the values ($f_{r_k}$, $Q_k$, $U_{r_k}$) calculated for the combinations is calculated for each one of these measures ($f_r$, Q, $U_r$),

      - the humidity ($\psi$) and/or density ($\varrho$) of the material are calculated by solving a second equation system (G2) containing the resonance frequencies ($f_{r_0}, f_{r_m}$) and the bandwidths ($BW_0$, $BW_m$) of the empty resonator and of the filled resonator and containing known calibration coefficients ($a_{f_{r1}}$, $a_{f_{r2}}$, $b_{f_{r1}}$, $b_{f_{r2}}$, $c_{f_{r1}}$, $c_{f_{r2}}$, $a_{f_{bw1}}$, $a_{f_{be2}}$, $b_{f_{bw1}}$, $b_{f_{bw2}}$, $c_{f_{bw1}}$, $c_{f_{bw2}}$) of the resonator.

2. Method according to claim 1, **characterized in that** the sampling of the resonance curve is carried out with equidistant steps ($\Delta f_1$, $\Delta f_2$).

3. Method according to claim 1 or 2, **characterized in that** the transmitter is operated with a constant power.

4. Method according to one of the preceding claims, **characterized in that** a condition for the arbitrary and/or random selection of the points ($f_i/U_i$) is, that the signal value ($U_i$) of a point ($f_i/U_i$) to be selected is greater than the peak signal value ($U_{max}$) attenuated by 3 dB.

5. Method according to one of the preceding claims, **characterized in that** the second equation system (G2) only approximately describes the relation between the humidity ($\psi$) and the density ($\varrho$) on the one hand and between the resonance frequency ($f_r$) and the resonator Q factor (Q) or the resonator frequency ($f_r$) and the bandwidth *(BW)* on the other hand in a defined range of humidity and density.

6. Method according to one of the preceding claims, **characterized in that** the second equation system (G2) is nonlinear.

7. Method according to one of the preceding claims, **characterized in that** the sampling using the transmitter is carried out up to the microwave band.

8. Method according to one of the preceding claims, **characterized in that** voltage or current values of the receiver are used for measuring the receiver signal.

**Revendications**

1. Procédé pour la détermination de l'humidité ($\Psi$) et/ou de la densité ($\varrho$) d'une matière diélectrique dans un résonateur rempli de cette matière, avec un émetteur et un récepteur, où

- l'émetteur délivre un signal,
- une courbe de résonance du résonateur rempli est explorée pas-à-pas, les valeurs d'intensité de signal ($U_i$) correspondantes du signal de récepteur étant mesurées pour différentes fréquences ($f_i$),
- une valeur limite inférieure ($U_a$) est calculée et une deuxième exploration exécutée avec des grandeurs de pas inférieures dans la plage où les valeurs d'intensité de signal ($U_i$) sont supérieures à la valeur limite ($U_a$),
- pour le résonateur rempli, la fréquence de résonance ($f_{r_m}$) et la largeur de bande ($BW_m$) sont déterminées à partir de points ($f_i/U_i$) mesurés, les grandeurs que sont la fréquence de résonance ($f_{r_m}$), la qualité de résonateur ($Q_m$) et le maximum de résonance ($U_{r_m}$) étant déterminées à partir des points ($f_i/U_i$) du résonateur rempli,

    - par sélection arbitraire et/ou aléatoire d'un ensemble de points ($f_i/U_i$), dont le nombre est un multiple entier de trois et est supérieur ou égal à six, et subdivision de l'ensemble de points en trois groupes ($M_1$, $M_2$, $M_3$) de grandeur égale,
    - par résolution suivant ces grandeurs ($f_{r_k}$, $Q_k$, $U_{r_k}$), pour chaque combinaison de trois points ($f_i/U_i$), chaque point ($f_i/U_i$) provenant d'un autre groupe ($M_1$, $M_2$, $M_3$), d'un premier système d'équations (G1), composé de trois équations de la courbe de résonance analytique valides pour ces trois points ($f_i/U_i$), et
    - par formation pour chacune de ces grandeurs ($f_r$, $Q$, $U_r$) de la valeur moyenne à partir des valeurs ($f_{r_k}$, $Q_k$, $U_{r_k}$) calculées pour les combinaisons,

- l'humidité ($\psi$) et/ou la densité ($\varrho$) de la matière sont calculées par résolution d'un deuxième système d'équation (G2) comprenant les fréquences de résonance ($f_{r0}$, $f_{rm}$) et les largeurs de bande ($BW_0$, $BW_m$) du résonateur vide et rempli et des coefficients de calibrage connus ($a_{f_{r1}}$, $a_{f_{r2}}$, $b_{f_{r1}}$, $b_{f_{r2}}$, $c_{f_{r1}}$, $c_{f_{r2}}$, $a_{f_{bw1}}$, $a_{f_{be2}}$, $b_{f_{bw1}}$, $b_{f_{bw2}}$, $c_{f_{bw1}}$, $c_{f_{bw2}}$) pour le résonateur.

2. Procédé selon la revendication 1, **caractérisé en ce que** l'exploration de la courbe de résonance est exécutée par pas équidistants ($\Delta f_1$, $\Delta f_2$).

3. Procédé selon la revendication 1 ou la revendication 2, **caractérisé en ce que** l'émetteur est mis en service avec une intensité constante.

4. Procédé selon l'une des revendications précédentes, **caractérisé en ce que**, comme condition pour la sélection arbitraire et/ou aléatoire des points ($f_i/U_i$), la valeur de signal ($U_i$) d'un point à sélectionner ($f_i/U_i$) est supérieure à la valeur de signal ($U_{max}$) maximale affaiblie de 3 dB.

5. Procédé selon l'une des revendications précédentes, **caractérisé en ce que** le deuxième système d'équations (G2) ne décrit qu'approximativement la relation entre humidité ($\psi$) et densité ($\varrho$) d'une part, et entre fréquence de résonance ($f_r$) et qualité de résonateur (Q), ou entre fréquence de résonance ($f_r$) et largeur de bande (*BW*) d'autre part, dans une plage d'humidité et de densité définie.

6. Procédé selon l'une des revendications précédentes, **caractérisé en ce que** le deuxième système d'équations (G2) est non linéaire.

7. Procédé selon l'une des revendications précédentes, **caractérisé en ce que** l'exploration au moyen de l'émetteur est exécutée jusque dans la plage des hyperfréquences.

8. Procédé selon l'une des revendications précédentes, **caractérisé en ce que** des valeurs de tension ou de courant du récepteur sont utilisées pour la mesure du signal de récepteur.

Fig. 1

Fig. 2

Fig. 3

Fig. 4

Fig. 5

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5666061 A

### In der Beschreibung aufgeführte Nicht-Patentliteratur

- **R. HERRMANN.** Feuchtemessung mit Mikrowellen-Resonatoren. *Technisches Messen,* 1997, vol. 64, 11
- **A.N. LUITEN.** High-resolution measurement of the temperature-dependence of the Q, coupling and resonant frequency of a microware resonator. *Meas. Sci. Technol.,* 1996, vol. 7, 949
- **R.K. AVORA.** Computer-Aided Measurement of Q-Factor with Application to Quasi-Optical Open Resonators. *IEEE Trans. on Justr. & Meas.,* 1991, vol. 40, 863